(19) Europäisches Patentamt
European Patent Office
Office européen des brevets

(11) EP 3 179 650 A1

(12) EUROPEAN PATENT APPLICATION
published in accordance with Art. 153(4) EPC

(43) Date of publication:
14.06.2017 Bulletin 2017/24

(51) Int Cl.:
H04J 99/00 (2009.01)    H04B 7/04 (2017.01)
H04J 11/00 (2006.01)

(21) Application number: 14899153.2

(22) Date of filing: 06.08.2014

(86) International application number:
PCT/JP2014/070791

(87) International publication number:
WO 2016/021012 (11.02.2016 Gazette 2016/06)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Fujitsu Limited
Kawasaki-shi, Kanagawa 211-8588 (JP)

(72) Inventor: JITSUKAWA, Daisuke
Kawasaki-shi
Kanagawa 211-8588 (JP)

(74) Representative: Lewin, David Nicholas
Haseltine Lake LLP
Lincoln House, 5th Floor
300 High Holborn
London WC1V 7JH (GB)

(54) WIRELESS COMMUNICATION SYSTEM, BASE STATION, MOBILE STATION, TRANSMISSION METHOD, AND DEMODULATION METHOD

(57) A base station (110) transmits by a group (112) of antennas arranged two-dimensionally along a horizontal direction and a vertical direction, a data signal weighted for each antenna and transmits by first plural antennas (113) arranged along the horizontal direction, a first reference signal for which weighting corresponding to the data signal is executed and that is specific to a mobile station (120). The base station (110) transmits without executing any weighting for the antennas, a second reference signal that is common to mobile stations (120), via second plural antennas (114) arranged along the vertical direction at positions corresponding to some of the first plural antennas (113). The base station (110) transmits weight information that indicates a weight for the data signal for each of the antennas arranged along the vertical direction. The mobile station (120) demodulates the data signal transmitted by the base station (110), based on the first reference signal, the second reference signal, and the weight information transmitted by the base station (110).

FIG.1

100

**Description**

TECHNICAL FIELD

The present invention relates to a wireless communications system, a base station, a mobile station, a transmission method, and a demodulation method.

BACKGROUND ART

Related to long term evolution (LTE), techniques have been traditionally known concerning beam forming and "multiple input multiple output (MIMO)" using plural antennas (see, e.g., Non-Patent Literature 1 below). A 3-D channel model in the standardization of Release 12 of the LTE is being studied (see, e.g., Non-Patent Literature 2 below).

Non-Patent Literature 1: "Study on 3D-channel model for Elevation Beamforming and FD-MIMO studies for LTE", 3GPPTM Work Item Description, Dec. 2012 Non-Patent Literature 2: "3rd Generation Partnership Project; Technical Specification Group Radio Access Network; Study on 3D channel model for LTE (Release 12)", 3GPP TR 36.873 V1.1.1, 2013-09

DISCLOSURE OF INVENTION

PROBLEM TO BE SOLVED BY THE INVENTION

However, with the traditional techniques, for example, a reference signal to demodulate data at a receiving side is transmitted from all the antennas and a problem therefore arises in that the radio resources used for the transmission of the reference signal increase when the number of the antennas is increased. To cope with this, although notifying the receiving side of weighting information for all the antennas using control information is conceivable, another problem arises in that the amount of the control information increases.

In one aspect, an object of the present invention is to suppress increases in the amount of control information and to suppress increases in the radio resources used in the transmission a reference signal.

MEANS FOR SOLVING PROBLEM

According to one aspect of the present invention, a wireless communications system, a base station, a mobile station, a transmission method, and a demodulation method are proposed that: transmit, by a group of antennas arranged two-dimensionally along a first direction and a second direction, a data signal weighted for respective antennas of the group of antennas; weight a first reference signal corresponding to the data signal and transmit the first reference signal for each mobile station of mobile stations with which communication is performed, the first reference signal being transmitted by a first plurality of antennas included in the group of antennas and arranged along the first direction; transmit without executing weighting for each antenna, a second reference signal that is common to the mobile stations with which communication is performed, the second reference signal being transmitted by a second plurality of antennas included in the group of antennas and arranged along the second direction at positions corresponding to some antennas of the first plurality of antennas; transmit weight information indicating a weight for the data signal at antennas included in the group of antennas and arranged along the second direction; and demodulate the data signal transmitted, based on the first reference signal, the second reference signal, and the weight information transmitted.

EFFECT OF THE INVENTION

According to one aspect of the present invention, increases in the amount of the control information and in the radio resources used in the transmission of a reference signal may be suppressed.

BRIEF DESCRIPTION OF DRAWINGS

FIG. 1 is an explanatory diagram of an example of a functional configuration of a wireless communications system;
FIG. 2 is an explanatory diagram of an example of a configuration of a wireless communications system;
FIG. 3 is a sequence diagram of an example of a procedure for processing between apparatuses executed by the wireless communications system;
FIG. 4 is a functional block diagram of an example of an eNB;

FIG. 5 is a functional block diagram of an example of a mobile station;

FIG. 6 is an explanatory diagram of an example of transmission antennas of the eNB;

FIG. 7 is an explanatory diagram of an example of a principle for estimating a radio channel of another antenna;

FIG. 8 is an explanatory diagram of an example of a signal transmitted from the eNB and the transmission antennas transmitting the signal;

FIG. 9 is an explanatory diagram of an example of a sub-frame configuration and mapping with PRB;

FIG. 10 is a sequence diagram of an example of a procedure for demodulating a PDSCH executed by the wireless communications system;

FIG. 11 is an explanatory diagram of an example of user scheduling; and

FIG. 12 is an explanatory diagram of an example of a comparison with a traditional case with respect to resource amount.

BEST MODE(S) FOR CARRYING OUT THE INVENTION

Preferred embodiments of a disclosed technology will be described in detail with reference to the accompanying drawings.

(Example of Functional Configuration of Wireless Communications System)

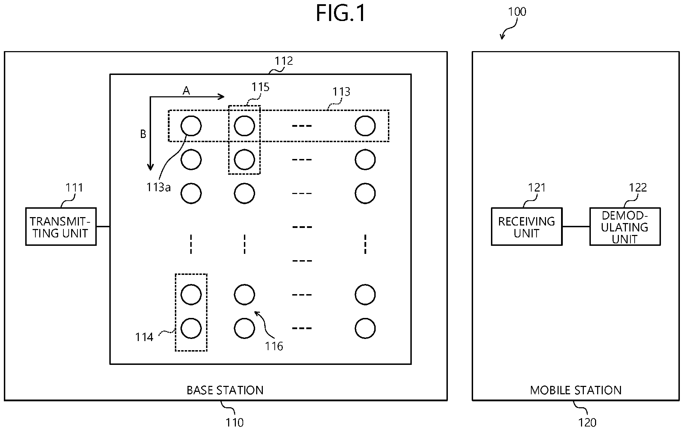

FIG. 1 is an explanatory diagram of an example of a functional configuration of a wireless communications system. As depicted in FIG. 1, a wireless communications system 100 includes a base station 110 and a mobile station 120. The base station 110 includes a transmitting unit 111. The transmitting unit 111 transmits by a group 112 of antennas, a data signal for which weighting for each of the antennas is executed.

The group 112 of antennas is arranged in two dimensions of a first direction and a second direction. The "first direction" and the "second direction" are directions different from each other. For example, the first direction is a horizontal direction (a direction of "A" in FIG. 1) and the second direction is a vertical direction (a direction of "B" in FIG. 1). The first direction and the second direction are not limited to these directions and, for example, the first direction may be set to be the vertical direction and the second direction may be set to be the horizontal direction.

The group 112 of antennas includes first plural antennas 113 arranged along the first direction, and second plural antennas 114 arranged along the second direction at positions corresponding to some antennas 113a of the first plural antennas 113. The first plural antennas 113 are aligned in a single line in the horizontal direction. The second plural antennas 114 are aligned in a single line in the vertical direction.

The transmitting unit 111 transmits by the first plural antennas 113, a first reference signal weighted corresponding to the data signal, for each mobile station 120 to be the transmission destination. The first reference signal is a reference signal specific to the mobile station 120. The transmitting unit 111 transmits a second reference signal common to the mobile stations 120 to be the transmission destinations, to the mobile stations 120 by the second plural antennas 114 without weighting the second reference signal for each of the antennas. The second reference signal is a reference signal common in one cell formed by, for example, the base station 110.

Although the second plural antennas 114 are not included among the first plural antennas 113, the arrangement thereof is not limited hereto and the antennas may be included among the first plural antennas 113 as denoted by a reference numeral "115". In this case, the reference signals merely have to be transmitted using the radio resources at different times and at different frequencies.

The transmitting unit 111 transmits weight information that indicates the weight for a data signal for each of the antennas arranged in the second direction. The weight information is, for example, precoding information of the vertical direction. The transmitting unit 111 does not transmit the first reference signal or the second reference signal by antennas 116 that are different from the first plural antennas 113 or the second plural antennas 114, among the group 112 of antennas.

As to the group 112 of antennas, the arrangement intervals of at least the antennas in the second direction are relatively small. For example, the group 112 of antennas are a group of antennas whose arrangement intervals of the antennas in the second direction are each smaller than one wavelength of a radio signal transmitted from each of the antennas 114, 115, and 116 included in the group 112 of antennas. A sharp directivity may be obtained for a beam in the vertical direction. When the intervals of the antennas are each small, the fading correlation becomes significant in the radio channels each connecting the antenna and the mobile station.

Temporal variations attributed to fading in each radio channel are substantially equal to each other and the phase difference of each radio channel depends on the incoming direction of the signal. The phase difference of the channel state of another antenna not transmitting the first reference signal, therefore, may be also estimated by estimating the phase difference of the radio channel of an antenna adjacent in the vertical direction.

The mobile station 120 includes a receiving unit 121 and a demodulating unit 122. The receiving unit 121 receives the first reference signal, the second reference signal, and the weight information transmitted by the base station 110. The receiving unit 121 outputs the received signals and the received weight information to the demodulating unit 122. The demodulating unit 122 demodulates the data signal transmitted by the base station 110 based on the first reference signal, the second reference signal, and the weight information received by the receiving unit 121.

For example, the demodulating unit 122 estimates the phase difference of the channel state between the antennas arranged in the second direction of the group 112 of antennas, based on the second reference signal. For example, the demodulating unit 122 compares the estimation results of the channel state based on the second reference signal transmitted by the second plural antennas 114, and estimates the phase difference of the channel state between the antennas arranged in the second direction based on the result of the comparison of the estimation results with each other.

The demodulating unit 122 estimates a distortion component for the data signal transmitted by the group 112 of antennas based on the estimation result of the channel state, based on the first reference signal, the estimated phase difference, and the weight information. The demodulating unit 122 demodulates the data signal based on the estimated distortion component.

(Example of Configuration of Wireless Communications System)

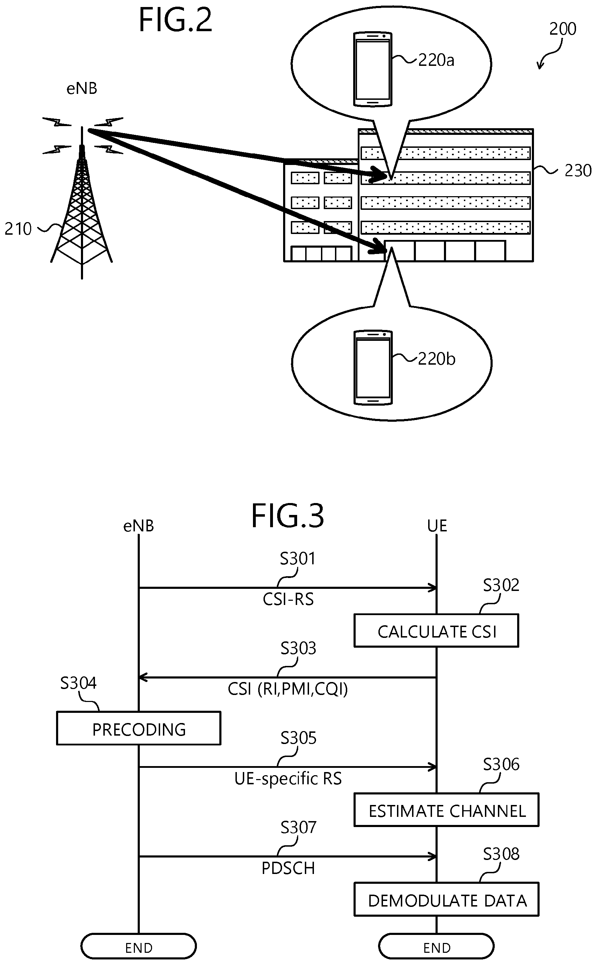

FIG. 2 is an explanatory diagram of an example of a configuration of a wireless communications system. A wireless communications system 200 includes an evolved node B (eNB) 210 and mobile stations 220. For example, the wireless communications system 100 of FIG. 1 is realized by the wireless communications system 200; the base station 110 of FIG. 1 is realized by the eNB 210; and the mobile station 120 of FIG. 1 is realized by the mobile station 220.

The eNB 210 is a multi-antenna base station and a base station of the LTE. The LTE is a communication standard of the 3rd Generation Partnership Project (3GPP) that is a standard-setting organization. The eNB 210 is wirelessly connected to an upper network and is also wirelessly connected to the mobile stations 220.

The mobile stations 220 are each a user apparatus such as a mobile phone or a smartphone. In FIG. 2, the mobile stations 220a and 220b are positioned, for example, at positions at different heights in a building 230. The mobile stations 220 are able communicate with the eNB 210 even when the mobile stations 220 are not positioned in the building 230.

Under the LTE, for example, MIMO is employed. MIMO is a technique of transmitting and receiving plural data streams using plural antennas at a time. With MIMO, for example, the number of spatially multiplexed data streams is adaptively controlled.

Precoding is executed for MIMO transmission of the LTE. The precoding is control on the transmitter side and takes the fading condition into consideration, and is to multiply by a predetermined weight, the transmission signal before being transmitted from the antenna.

A directional beam may adaptively be formed for the mobile station by executing the precoding and, as a result, the electric power of the received signal at the mobile station may be increased. For example, some patterns are determined in advance according to the specification for the weight used in the precoding.

The mobile station 220 measures the fading condition and selects the best precoding pattern based on the measured fading condition. The mobile station 220 feeds back the precoding pattern to the eNB 210. The feedback signal is a precoding matrix indicator (PMI).

The wireless communications system 200 forms the directional beams for the horizontal and the vertical directions by the multiple antennas arranged in the two-dimensional array and, for example, the 3D-MIMO or the full dimension-MIMO (FD-MIMO) is employed. With this approach, as to the transmission to the mobile station 220 in a high-rise building, interference received by another mobile station 220 present on another floor may also be alleviated because high directivity may be obtained. The gain of the cell division may be obtained by virtually forming sectors in an elevation angle direction in addition to the fixed formation of sectors in the horizontal direction.

(Overview of Procedure for Processing between Apparatuses Executed by Wireless Communications System)

FIG. 3 is a sequence diagram of an example of a procedure for processing between apparatuses executed by the wireless communications system. In FIG. 3, the eNB 210 transmits a channel state information-reference signal (CSI-RS) to the mobile station 220 (in FIG. 3, user equipment (UE)) (step S301). The CSI-RS is a signal to execute measurement of the quality.

The mobile station 220 calculates the CSI (the channel quality) (step S302) and transmits the calculated CSI to the eNB 210 (step S303). The CSI transmitted from the mobile station 220 to the eNB 210 includes a channel quality indicator (CQI), a precoding matrix indicator (PMI), and a rank indicator (RI).

The eNB 210 executes the precoding using these pieces of information (step S304). The eNB 210 transmits a UE-specific reference signal (RS) to the mobile station 220 (step S305). The eNB 210 applies the same precoding matrix to a physical downlink shared channel (PDSCH) and the UE-specific RS to transmit the PDSCH and the UE-specific RS to the mobile station 220. The first reference signal is realized by, for example, the UE-specific RS. The mobile station 220 executes channel estimation of calculating the channel estimation value based on the UE-specific RS (step S306).

The eNB 210 transmits the PDSCH that is a downlink shared channel (step S307). The mobile station 220 demodulates the PDSCH using the channel estimation value calculated at step S306 (step S308) and the series of process steps comes to an end.

(Example of Functional Block Diagram of eNB)

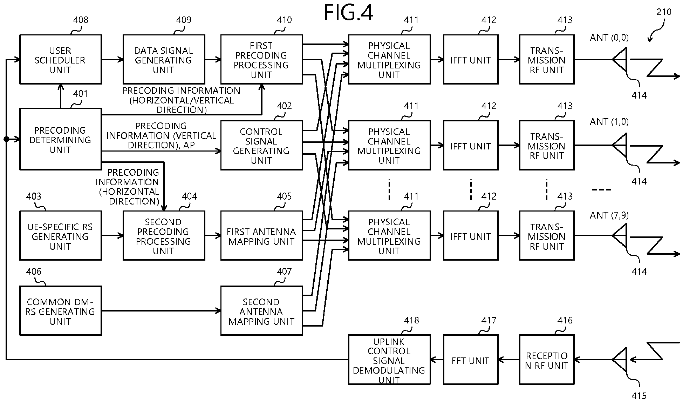

FIG. 4 is a functional block diagram of an example of the eNB. As depicted in FIG. 4, the eNB 210 includes a precoding determining unit 401, a control signal generating unit 402, a UE-specific RS generating unit 403, a second precoding processing unit 404, a first antenna mapping unit 405, a common demodulation-reference signal (common DM-RS) generating unit 406, a second antenna mapping unit 407, a user scheduler unit 408, a data signal generating unit 409, and a first precoding processing unit 410.

The eNB 210 also includes physical channel multiplexing units 411, inverse fast Fourier transform (IFFT) units 412, transmission radio frequency (RF) units 413, transmission antennas 414, a reception antenna 415, a reception RF unit 416, a fast Fourier transform (FFT) unit 417, and an uplink control signal demodulating unit 418.

The precoding determining unit 401 determines precoding matrix information based on the PMI output from the uplink control signal demodulating unit 418. The precoding determining unit 401 outputs the determined information to the control signal generating unit 402, the second precoding processing unit 404, the user scheduler unit 408, and the first precoding processing unit 410.

For example, the precoding determining unit 401 outputs the precoding information (the weight information) for the vertical direction and antenna port (AP) information for the UE-specific RS, to the control signal generating unit 402. The AP information corresponds to a data stream. The precoding determining unit 401 outputs the precoding information for the horizontal direction to the second precoding processing unit 404. The precoding determining unit 401 outputs the precoding information for the horizontal direction and for the vertical direction to the first precoding processing unit 410. The precoding determining unit 401 outputs the precoding matrix information to the user scheduler unit 408.

The control signal generating unit 402 generates a control signal that includes the precoding information for the vertical direction and the AP information of the UE-specific RS to be applied to the mobile station 220, using the information output from the precoding determining unit 401. The control signal generating unit 402 outputs the generated control signal to the physical channel multiplexing unit 411.

The UE-specific RS generating unit 403 generates the UE-specific RS and outputs the UE-specific RS to the second precoding processing unit 404. The second precoding processing unit 404 executes a precoding process for the UE-specific RS output from the UE-specific RS generating unit 403, using the precoding information for the horizontal direction output from the precoding determining unit 401. The second precoding processing unit 404 outputs the UE-specific RS for which the precoding process is executed, to the first antenna mapping unit 405.

The first antenna mapping unit 405 executes mapping on the (plural) transmission antennas 414 in one specific row arranged in the horizontal direction for transmission of the UE-specific RS. The first antenna mapping unit 405 outputs the UE-specific RS for which the mapping is executed, to the physical channel multiplexing unit 411. The mapping enables the UE-specific RS to be transmitted from the defined transmission antennas 414 and the defined resources for each time (each sub-frame) and each frequency (each physical resource block).

The common DM-RS generating unit 406 generates the common DM-RS that is the reference signal common in one cell formed by the base station 110 and used when the mobile station 220 demodulates data, and outputs the generated common DM-RS to the second antenna mapping unit 407. The second reference signal is realized by, for example, the common DM-RS.

The second antenna mapping unit 407 executes mapping for the common DM-RS on two transmission antennas 414 arranged in the vertical direction for transmission of the common DM-RS. The second antenna mapping unit 407 outputs the common DM-RS for which the mapping is executed, to the physical channel multiplexing unit 411. The mapping enables the common DM-RS to be transmitted from the defined transmission antennas 414 and the defined resources for each time (each sub-frame) and each frequency (each PRB).

The user scheduler unit 408 executes scheduling using the PMI output from the uplink control signal demodulating unit 418 and the precoding matrix information determined by the precoding determining unit 401. The user scheduler unit 408 schedules the mobile stations 220 compatible with each other for the precoding to be in one same sub-frame. For example, when concurrent transmission is executed for the plural mobile stations 220 positioned in the same direction, mutual interference may occur and the user scheduler unit 408 therefore combines the plural mobile stations 220 positioned in different directions to schedule these plural mobile stations 220 to be in one same sub-frame. The user scheduler unit 408 outputs the scheduling information to the data signal generating unit 409.

The data signal generating unit 409 generates a data signal using the scheduling information output from the user scheduler unit 408, and outputs the generated data signal to the first precoding processing unit 410. The first precoding processing unit 410 executes a precoding process using the data signal output from the data signal generating unit 409 and the precoding information for the horizontal direction and for the vertical direction determined by the data signal generating unit 401. The first precoding processing unit 410 outputs the data signal for which the precoding process is executed, to the physical channel multiplexing unit 411.

Into the physical channel multiplexing unit 411, the control signal is input from the control signal generating unit 402, the UE-specific RS is input from the first antenna mapping unit 405, the common DM-RS is input from the second antenna mapping unit 407, and the data signal is input from the first precoding processing unit 410. The physical channel multiplexing unit 411 multiplexes the various types of signals input thereinto, and outputs a multiplexed signal to a corresponding IFFT unit 412 of the plural IFFT units 412. The IFFT unit 412 converts the signal output from the physical channel multiplexing unit 411 into a signal in the time domain, and outputs the converted signal to the corresponding transmission RF unit 413 of the plural transmission RF units 413.

The transmission RF unit 413 digital to analog (D/A)-converts and carrier-modulates the signal output from the IFFT unit 412 to generate a transmission signal. The transmission RF unit 413 outputs the generated transmission signal to the corresponding transmission antenna 414 of the plural (80) transmission antennas 414. The transmission antenna 414 wirelessly outputs the transmission signal output from the transmission RF unit 413 as a downlink transmission signal.

The reception antenna 415 receives the radio signal output from the mobile station 220 and outputs the received radio signal to the reception RF unit 416. The reception RF unit 416 removes the carrier and analog to digital (A/D)-converts the signal output from the reception antenna 415, and outputs the converted signal to the FFT unit 417. The FFT unit 417 divides the signal output from the reception RF unit 416 into pieces of data of frequency components by Fourier transform and outputs the pieces of data to the uplink control signal demodulating unit 418. The uplink control signal demodulating unit 418 extracts the PMI from the pieces of data output from the FFT unit 417 and outputs the PMI to the precoding determining unit 401.

The transmitting unit 111 depicted in FIG. 1 is realized by, for example, the precoding determining unit 401, the control signal generating unit 402, the UE-specific RS generating unit 403, the second precoding processing unit 404, the first antenna mapping unit 405, the common DM-RS generating unit 406, and the second antenna mapping unit 407. The group 112 of antennas depicted in FIG. 1 is realized by the plural transmission antennas 414.

(Example of Functional Block Diagram of Mobile Station)

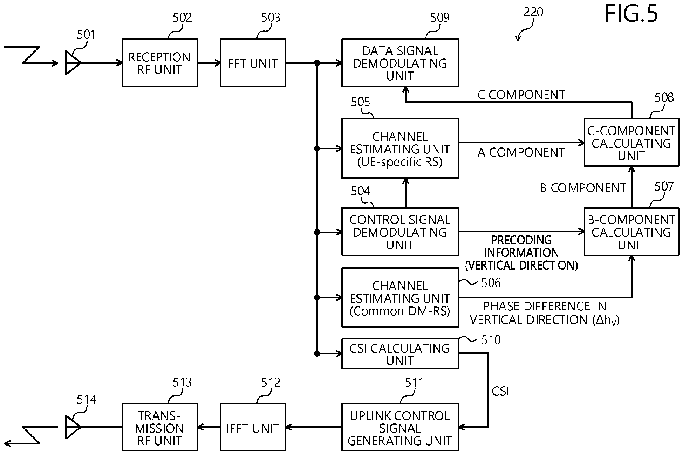

FIG. 5 is a functional block diagram of an example of the mobile station. As depicted in FIG. 5, the mobile station 220 includes a reception antenna 501, a reception RF unit 502, an FFT unit 503, a control signal demodulating unit 504, a channel estimating unit 505, a channel estimating unit 506, a B-component calculating unit 507, a C-component calculating unit 508, a data signal demodulating unit 509, a CSI calculating unit 510, an uplink control signal generating unit 511, an IFFT unit 512, a transmission RF unit 513, and a transmission antenna 514.

The reception antenna 501 receives the radio signal output from the eNB 210 and outputs the received radio signal to the reception RF unit 502. The reception RF unit 502 removes the carrier and A/D-converts the signal output from the reception antenna 501, and outputs the converted signal to the FFT unit 503. The FFT unit 503 divides the signal output from the reception RF unit 502 into pieces of data of frequency components by Fourier transform and outputs the pieces of data to the control signal demodulating unit 504, the channel estimating units 505 and 506, the data signal demodulating unit 509, and the CSI calculating unit 510.

The control signal demodulating unit 504 obtains the precoding information (the weight information) for the vertical direction applied to the mobile station 220 and the AP information of the UE-specific RS from the signal output from the FFT unit 503. The control signal demodulating unit 504 outputs the AP information of the UE-specific RS to the channel estimating unit 505. The control signal demodulating unit 504 outputs the precoding information for the vertical direction to the B-component calculating unit 507.

The channel estimating unit 505 obtains an A component of equation (6), described later, by channel estimation based on the UE-specific RS using the signal output from the FFT unit 503 and the AP information output from the control signal demodulating unit 504. The channel estimating unit 505 outputs the A component obtained by the channel estimation to the C-component calculating unit 508. The channel estimating unit 506 calculates the phase difference $\Delta h_v$ in the vertical direction between radio channels by the channel estimation based on the common DM-RS using the signal output from the FFT unit 503, and outputs the phase difference $\Delta h_v$ to the B-component calculating unit 507.

The B-component calculating unit 507 obtains a B component of equation (6), described later, using the precoding information for the vertical direction output from the control signal demodulating unit 504 and the phase difference $\Delta h_v$ output from the channel estimating unit 506. The B-component calculating unit 507 outputs the calculated B component to the C-component calculating unit 508. The C-component calculating unit 508 obtains a C component ($C = A \times B$) of equation (6) described later using the A component output from the channel estimating unit 505 and the B component output from the B-component calculating unit 507. The C component is a channel distortion component in the PDSCH. The C-component calculating unit 508 outputs the calculated C component to the data signal demodulating unit 509.

The data signal demodulating unit 509 demodulates the PDSCH included in the signal output from the FFT unit 503 using the C component output from the C-component calculating unit 508, and outputs the demodulated PDSCH as user data. The CSI calculating unit 510 calculates the CSI (the channel quality) and outputs the CSI to the uplink control signal generating unit 511. The uplink control signal generating unit 511 generates an uplink control signal using the CSI output from the CSI calculating unit 510 and outputs the generated uplink control signal to the IFFT unit 512. The IFFT unit 512 converts the signal output from the uplink control signal generating unit 511 into a signal in the time domain and outputs the converted signal to the transmission RF unit 513.

The transmission RF unit 513 D/A-converts and carrier-modulates the signal output from the IFFT unit 512 to generate a transmission signal. The transmission RF unit 513 outputs the generated transmission signal to the transmission antenna 514. The transmission antenna 514 wirelessly outputs the transmission signal output from the transmission RF unit 513 as an uplink transmission signal.

The receiving unit 121 depicted in FIG. 1 is realized by the reception RF unit 502, the FFT unit 503, and the like. The demodulating unit 122 depicted in FIG. 1 is realized by, for example, the control signal demodulating unit 504, the channel estimating units 505 and 506, the B-component calculating unit 507, the C-component calculating unit 508, and the data signal demodulating unit 509.

(Example of Arrangement of Transmission Antennas of eNB)

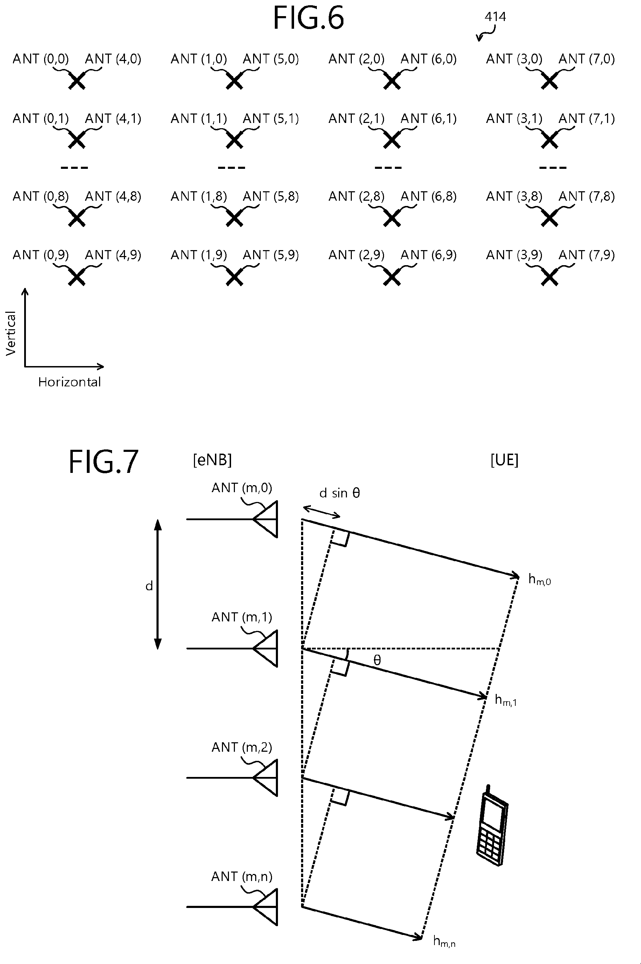

FIG. 6 is an explanatory diagram of an example of the transmission antennas of the eNB. In FIG. 6, the lateral direction represents the horizontal direction and the longitudinal direction represents the vertical direction. For example, ANT(0,0) to (7,0) are arranged in the horizontal direction at equal intervals. For example, ANT(0,0) to (0,9) are arranged in the vertical direction at equal intervals. The antennas other than these are arranged similarly in the respective directions at equal intervals.

In FIG. 6, one line in a diagonal direction indicates one antenna and the antennas intersecting with each other indicate that the polarized waves thereof are different from each other. For example, ANT(0,0) and ANT(4,0) have polarized waves that are different from each other.

The intervals of at least the antennas in the vertical direction are relatively small and sharp directivity may therefore be obtained for the beam in the vertical direction. The fading correlation becomes significant in the radio channels of the antennas in the vertical direction and the phase difference of each of the radio channels depends on the incoming direction of the signal.

The radio channel of each of the other antennas not transmitting the RS (for example, the common DM-RS) may therefore be also estimated by estimating the phase difference of the radio channel of an antenna adjacent thereto in the vertical direction. For example, the RS is transmitted from ANT(m,0) and ANT(m,1), and the radio channel state of another ANT(m,n) can be estimated based on the phase difference between the radio channels thereof. In this embodiment, the estimation based on the phase difference is used.

(Principle for Estimating Radio Channel of Other Antennas)

FIG. 7 is an explanatory diagram of an example of the principle for estimating the radio channel of another antenna. In FIG. 7, ANT(m,0), ANT(m,1), ANT(m,2), ..., ANT(m,n) are arranged in the vertical direction. The common DM-RS is transmitted from ANT(m,0) and ANT(m,1), and the radio channel of another ANT(m,n) may be estimated based on the phase difference $\Delta h_v$ between the radio channels thereof. For example, the radio channel may be represented by equations (1) and (2) below. "n" is n=0, ..., 9.

$$h_{m,1} = h_{m,0} \cdot \Delta h_v \qquad (1)$$

$$h_{m,n} = h_{m,(n-1)} \cdot \Delta h_v = h_{m,0} \cdot (\Delta h_v)^n \qquad (2)$$

"$\Delta h_v$" can be represented by equation (3) below.

$$\Delta h_v = \exp\left(-j\frac{2\pi}{\lambda} d \sin\theta\right) \qquad (3)$$

"h" represents the phase. "d" represents each of the intervals of the antennas in the vertical direction. "$\theta$" represents the angle against the mobile station 220. "$\lambda$" represents the wavelength of the signal. As above, the difference is the phase difference $\Delta h_v$ between the phase of the common DM-RS received by the mobile station 220 from ANT(m,n-1) and the phase of the common DM-RS received by the mobile station 220 from ANT(m,n). The radio channel state of other antennas may be estimated by using this principle.

(About Distortion Component of Signal Observed at Mobile Station)

The distortion component of the signal observed at the mobile station 220 will be described. Equation (4) below represents the definition of the radio channel from each of the transmission antennas.

$$\begin{bmatrix} h_{0,0} & \cdots & h_{7,0} \\ \vdots & \ddots & \vdots \\ h_{0,9} & \cdots & h_{7,9} \end{bmatrix} \qquad (4)$$

equation (5) below represents that the weights (the precoding) of the antennas have a hierarchical structure in the horizontal direction and the vertical direction.

$$\begin{bmatrix} w_{H0}w_{V0} & \cdots & w_{H7}w_{V0} \\ \vdots & \ddots & \vdots \\ w_{H0}w_{V9} & \cdots & w_{H7}w_{V9} \end{bmatrix} \qquad (5)$$

The distortion component C (the C component) in the PDSCH received by the mobile station 220 may be represented by equation (6) below using the phase difference $\Delta h_v$ between the antennas.

$$C = w_{V0}(w_{H0}h_{0,0} + \cdots + w_{H7}h_{7,0}) + \cdots + w_{V9}(w_{H0}h_{0,9} + \cdots + w_{H7}h_{7,9})$$

$$= w_{V0}(w_{H0}h_{0,0} + \cdots + w_{H7}h_{7,0}) + \cdots + w_{V9}\{w_{H0}h_{0,0}(\Delta h_V)^9 + \cdots + w_{H7}h_{7,0}(\Delta h_V)^9\}$$

$$= (w_{H0}h_{0,0} + \cdots + w_{H7}h_{7,0})(w_{V0} + \Delta h_v \cdot w_{v1} + \cdots + (\Delta h_v)^9 w_{V9}) = A \cdot B \qquad (6)$$

In equation (6) above, the "A component" corresponds to the distortion at the mobile station 220 in a case where a signal to which the antenna weights (the precoding) in the horizontal direction is applied is transmitted from the antennas in the highest row (ANT(0,0) to (7,0)). The A component can be obtained by the channel estimation for the UE-specific RS. The B component is obtained using the weight information of the antennas in the vertical direction (the precoding information for the vertical direction) and the phase difference $\Delta h_v$ between the radio channels. The C component is obtained by multiplying the A component by the B component.

(About Another Example of Calculation of $\Delta h_v$)

Another example of the calculation of $\Delta h_v$ will be described. The example of the calculation represented by equation (1) and equation (2) represents an example where $\Delta h_v$ is calculated between ANT(m,0) and ANT(m,1) that is adjacent thereto in the vertical direction while, not limiting to this, $\Delta h_v$ may also be calculated between ANT(m,0) and ANT that is not adjacent thereto. This case will be described. The right side of equation (3) above may be represented as "-exp(-j$\phi$)" as a function of $\phi$. The phase difference $h_{m\cdot n}/h_{m,0}$ of the radio channel between ANT(m,0) and ANT(m,n) may be represented as in equation (7) below.

$$h_{m\cdot n}/h_{m,0} = (\Delta h_v)^n = \exp(-j\phi n) \qquad (7)$$

When conditions $0 \leq \phi \cdot n < 2\pi$ are satisfied, equation (8) below holds.

$$\arg(h_{m\cdot n}/h_{m,0}) = -\phi \cdot n \qquad (8)$$

$\Delta h_v$ may therefore be represented as in equation (9) below.

$$\Delta h_v = \exp\left\{\frac{j}{n} arg\left(\frac{h_{8\cdot n}}{h_0}\right)\right\} \qquad\qquad (9)$$

$\Delta h_v$ may therefore be calculated even when antennas away from each other are used.
Equation (10) below is considered as a variation of the above conditional equation.

$$0 \leq \phi \cdot n = 2\pi \cdot \frac{nd}{\lambda}\sin\theta \leq 2\pi \cdot \frac{nd}{\lambda} < 2\pi \rightarrow 0 \leq n < \frac{\lambda}{d} \qquad (10)$$

The phase difference between the radio channels may be obtained even when the antennas used are away from each other within a range for the conditional equation of equation (10) above to be satisfied. For example, when the antenna interval d is d=0.5 $\lambda$, only n to be n=1 satisfies the condition. When the antenna interval d is d=0.3 $\lambda$, only n to be n=1, 2, or 3 satisfies the condition. The case where n is n=3 corresponds to ANT(m,3). $\Delta h_v$ can also be calculated using ANT(m,0) and ANT(m,3).

(Example of Signal Transmitted from eNB and Transmission Antennas Transmitting Signal)

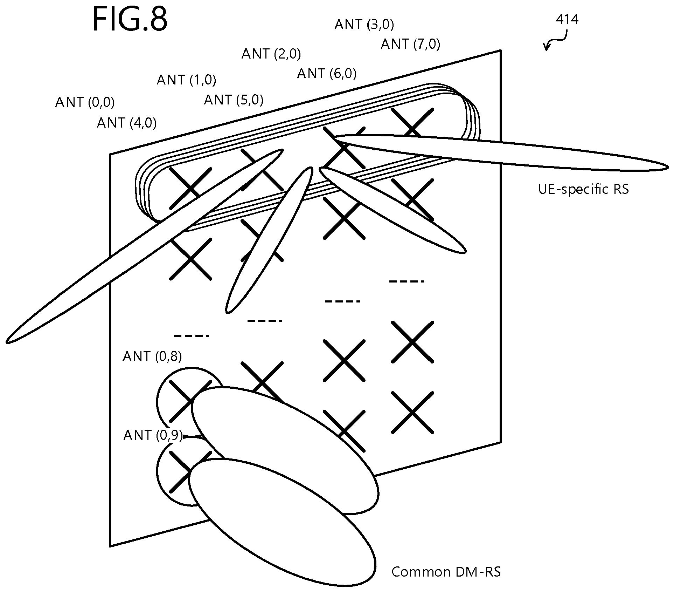

FIG. 8 is an explanatory diagram of an example of a signal transmitted from the eNB and the transmission antennas transmitting the signal. As depicted in FIG. 8, the antennas (ANT(0,0) to (7,0)) in the highest row transmit the UE-specific RS to which the antenna weights for the horizontal direction are applied. The ANT(0,8) and ANT(0,9) transmit the common DM-RS to which no antenna weight is applied.

(Example of Sub-Frame Configuration and Mapping with Physical Resource Block (PRB))

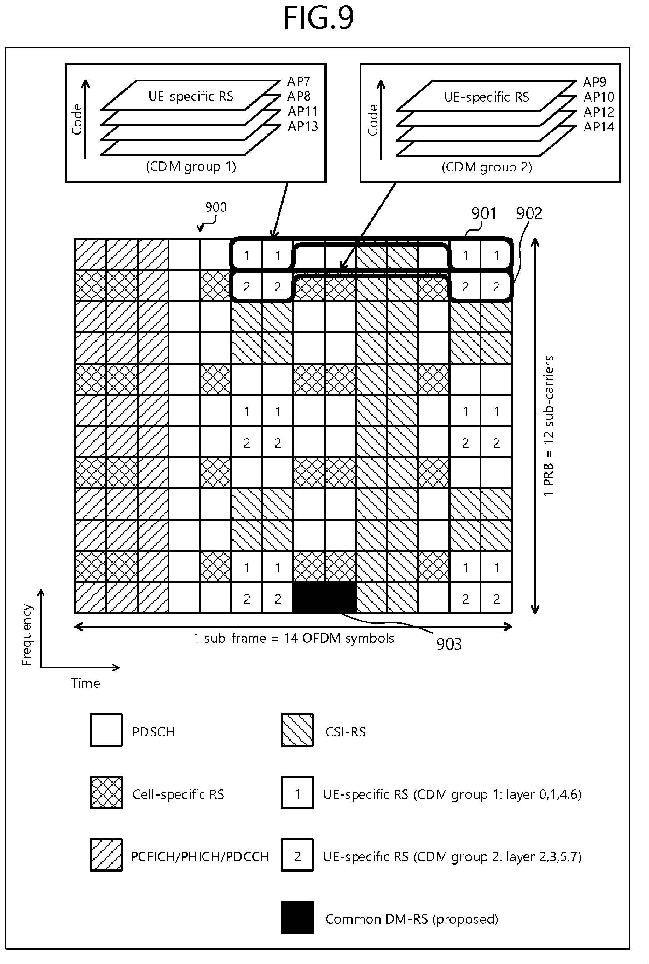

FIG. 9 is an explanatory diagram of an example of the sub-frame configuration and mapping with PRB. As depicted in the mapping 900 of FIG. 9, in an orthogonal frequency division multiplex access (OFDMA) of the radio access scheme used in the LTE, a radio resource can be assigned to a user such as that whose 12 sub-carriers (180 kHz) adjacent to each other in the frequency direction at intervals of each 15 kHz are sectioned as one PRB that is further sectioned by each 1 ms in the time direction.
In FIG. 9, in the lateral direction, one sub-frame of 1 ms (=14 OFDM symbols) is depicted. The physical channels and the signals are mapped on the PRB. Types of the physical channel include the PDSCH, a physical control format indicator channel (PCFICH), a physical HARQ indicator channel (PHICH), and a physical downlink control channel (PDCCH).
The PCFICH is a channel to notify how many symbols at the head of each sub-frame are reserved as a region capable of transmitting downlink control information. The PHICH is a channel to transmit delivery acknowledgement information (ACK/NACK) for a physical uplink shared channel (PUSCH). The PUSCH is a shared data channel to transmit uplink user data. The PDCCH is used to give notification of the assignment information of the radio resources to the user selected by the eNB 210 based on the scheduling. The precoding information for the vertical direction (the weight information) is transmitted using, for example, the PDCCH.
As depicted in the mapping 900, such signals are assigned as the cell-specific RS specific to the cell and the UE-specific RS specific to the user, and CSI-RS. For example, code-multiplexing is executed for the UE-specific RS. As denoted by a reference numeral "901", "1" of the UE-specific RS is present in each of four consecutive resource elements (four boxes) and can code-multiplex four APs (APs 7, 8, 11, and 13). An orthogonal code is used for the code-multiplexing.
Similarly, as denoted by a reference numeral "902", boxes of "2" of the UE-specific RS are present on four consecutive resource elements (the four boxes) and can multiplex four APs (AP 9, 10, 12, and 14). As above, the eight APs are supported for the UE-specific RS. As to a reference numeral "903", the common DM-RS is assigned to the positions at each of which the PDSCH is assigned.
The UE-specific RS for the horizontal direction may concurrently transmit eight types of AP of AP7 to 14. AP information is information that designates which one of the eight types is used to execute the channel estimation. For example, the AP information is information for the mobile station 220 to know which type of orthogonal code is used for recovery, because four types of orthogonal code are multiplexed by the eNB 210.
For example, when the number of the antennas is increased to be, for example, eight in the horizontal direction and 10 in the vertical direction, the APs of the UE-specific RS is increased corresponding to the number of multiplexed codes. In this embodiment, the eNB 210 transmits the RS (the UE-specific RS) specific to the mobile station 220 from the group 112 of antennas in the horizontal direction and transmits the RS (the common DM-RS) common to the mobile stations 220 from the group 112 of antennas in the vertical direction. The recovery of the data is therefore enabled and the resources may be reduced even when the common DM-RS common to the mobile stations 220 is not transmitted from all the transmission antennas 414.

(Example of Procedure for Demodulating PDSCH Executed by Wireless Communications System)

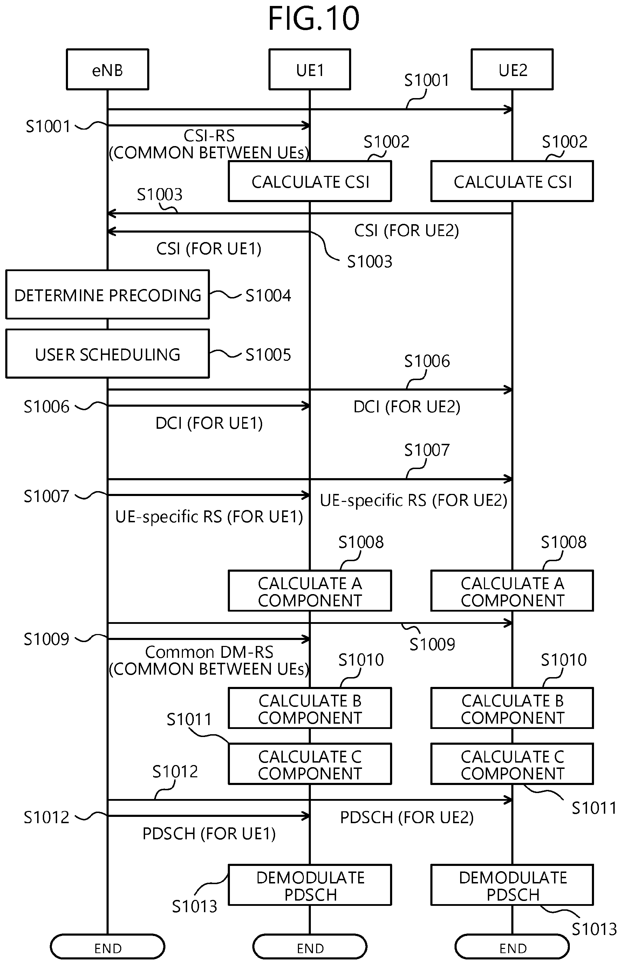

FIG. 10 is a sequence diagram of an example of the procedure for demodulating the PDSCH executed by the wireless communications system. It is assumed as preconditions for the description of FIG. 10 that, at the eNB 210, the number of the antennas is 8 (in the horizontal direction) $\times$10 (in the vertical direction) =80, the multi user-MIMO (MU-MIMO) is applied, and the precoding control for the vertical direction is executed in eight stages (beam is selected from eight candidates). The eNB 210 enables scheduling of the PDSCHs to be in one same sub-frame for a combination of UEs that are compatible with each other to avoid any interference during the concurrent transmission.

In FIG. 10, the eNB 210 transmits the CSI-RS to the plural mobile stations 220 (UE1 and UE2) (step S1001). The CSI-RS is the signal to execute the quality measurement and is a signal common to UE1 and UE2.

The mobile station 220 calculates the CSI (the channel quality) (step S1002) and transmits the calculated CSI to the eNB 210 (step S1003). The CSI differs for each of the mobile stations 220. The CSI includes a channel quality indicator (CQI), a precoding matrix indicator (PMI), and a rank indicator (RI).

The eNB 210 determines the precoding using these pieces of information (step S1004) and executes user scheduling (step S1005). The eNB 210 transmits downlink control information (DCI) to each of the mobile stations 220 (step S1006). The DCI is different between UE1 and UE2. The DCI includes information concerning the antenna weight $Wv_n$ for the vertical direction represented in 3 bits and information concerning the AP to be used in the transmission of the UE-specific RS.

The eNB 210 transmits the UE-specific RS to the mobile stations 220 (step S1007). The UE-specific RS differs between UE1 and UE2. The UE-specific RS is a signal of which there are up to eight types and to which the precoding for the horizontal direction is applied from the transmission antennas 414 arranged in the horizontal direction and in a specific row.

The mobile station 220 calculates the A component by the channel estimation by the UE-specific RS (step S1008). The eNB 210 transmits the common DM-RS to the mobile stations 220 (step S1009). The common DM-RS is a signal common to UE1 and UE2. The common DM-RS is a signal to which the precoding is not applied from the two transmission antennas 414 arranged in the vertical direction. The mobile station 220 calculates the B component from the channel component by the common DM-RS (step S1010).

At step S1010, the mobile station 220 calculates the phase difference $\Delta h_v$ between the radio channels by the channel estimation in the common DM-RS and obtains the B component by using the information on the antenna weight $Wv_n$ included in the DCI. The mobile station 220 calculates the C component that is the channel distortion component in the PDSCH by using the A component and the B component (step S1011).

The eNB 210 transmits the PDSCH to the mobile stations 220 (step S1012). The mobile station 220 demodulates the PDSCH using the received PDSCH and the calculated C component (step S1013) and the series of process steps come to an end.

(Example of User Scheduling)

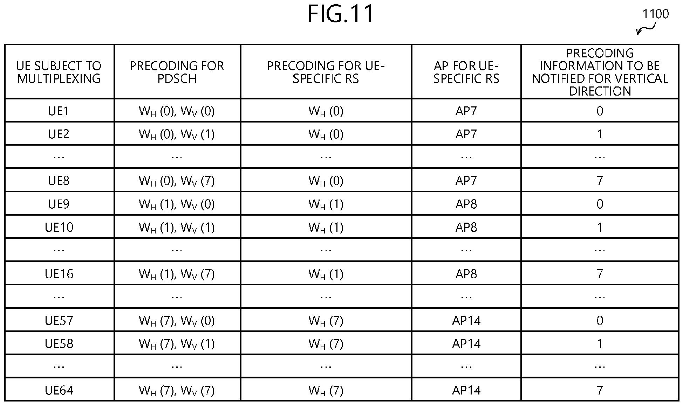

FIG. 11 is an explanatory diagram of an example of the user scheduling. In FIG. 11, exemplary combinations 1100 represent examples as to what type of multiplexing may be executed including the plural types of physical channels. The UEs subject to the multiplexing are 64 that are UE1 to 64. The "Precoding for PDSCH" represents a case where both of the horizontal and the vertical ones are applied, and 64 types thereof are present. "(0)" and "(1)" of "Precoding for PDSCH" represent indexes for the precoding.

The "Precoding for UE-Specific RS" represents only the horizontal component and represents any one of $W_H(0)$ to $W_H(7)$. The "AP for UE-specific RS" represents by which AP the UE-specific RS is transmitted and represents any one of APs AP7 to AP14. A different resource is used corresponding to the precoding pattern for the "AP for UE-specific RS". Notification of the "AP for UE-specific RS" is given by the DCI. The "Precoding Information for Vertical Direction" that is to be notified has an index number of the antenna weight Wv for the vertical direction and represents any one of 0 to 7. Notification of the "AP for UE-specific RS" is given by the DCI.

(Example of Comparison with Traditional Case with respect to Resource Amount)

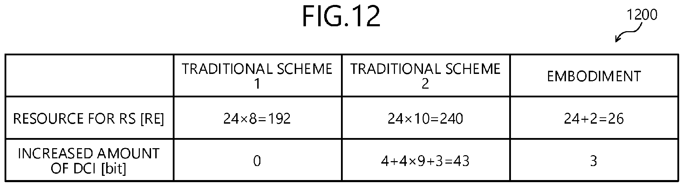

FIG. 12 is an explanatory diagram of an example of a comparison with the traditional case with respect to the resource amount. It is assumed as preconditions for the comparison that, at the eNB 210, for example, the number of the antennas is 8 (in the horizontal direction) $\times$10 (in the vertical direction) =80, the number of the multiplexing sessions of the MU-MIMO is 8 (multiplexing sessions) $\times$8 (times) =64, and the number of sub-bands is 9 (the system bandwidth of 10 MHz (50 RB) and the sub-band size of 6 RB). For example, the horizontal direction PMI ($W_1$) is set to be 4 bits, the horizontal direction PMI ($W_2$) is set to be 4 bits, and the vertical direction PMI is set to be 3 bits.

In the explanatory diagram 1200, a "Traditional Scheme 1" represents a case where the RS for the demodulation is configured only by the UE-specific RS. In the traditional scheme 1, the orthogonal time and frequency resources of the amount corresponding to the number of the multiplexing sessions of the MU-MIMO are necessary. For example, the resources for the RS are "24$\times$8=192". "24" in this calculation equation represents the number of the resource elements of the UE-specific RS (24 boxes) represented by "1" and "2" of FIG. 9. "8" in the calculation equation represents "8" based on the fact that the number of the multiplexing sessions of the MU-MIMO is set to be 8 times. The increased amount of the DCI is zero in the traditional scheme 1.

A "Traditional Scheme 2" represents a case where the RS for the demodulation is configured only by the common DM-RS. In the traditional scheme 2, the orthogonal time and frequency resources of the amount corresponding to the number of the antennas of the transmission antennas 414 are necessary. Notification of the information concerning the precoding needs to be given to the mobile stations 220. In particular, the amount of the information concerning the horizontal component is large because this information is present for each of the sub-bands. In the traditional scheme 2, the resources for the RS are "24$\times$10=240". "24" in this calculation equation represents the number of the resource elements of the UE-specific RS (24 boxes) represented by "1" and "2" of FIG. 9. "10" in this calculation equation represents "10" that is based on the fact that the number of the antennas is 10 times as many as the original number thereof in the vertical direction.

In the traditional scheme 2, the increased amount of the DCI is "4+4x9+3=43 bits". "4" at the leftmost term of this calculation equation represents "4" that is based on the fact that the horizontal direction PMI ($W_1$) is 4 bits. "4" of "4x9" of this calculation equation represents "4" that is based on the fact that the horizontal direction PMI ($W_2$) is 4 bits. "9" of "4$\times$9" of this calculation equation represents the number of the sub-bands. "3" of this calculation equation represents "3" that is based on the fact that the vertical direction PMI is 3 bits.

On the other hand, in this embodiment, the resources for the RS are "24+2=26". "24" in this calculation equation represents the number of the resource elements of the UE-specific RS (24 boxes) represented by "1" and "2" of FIG. 9. "2" in the calculation equation represents the number of the resource elements of the common DM-RS (2 boxes) of FIG. 9. The increased amount of the DCI is "3 bits". These "3 bits" correspond to the information amount of the antenna weight $Wv_n$ in the vertical direction.

As above, in this embodiment, increase of the RS resources and increase of the DCI can be suppressed even when the number of the antennas is set to be 80, the number of the multiplexing sessions of the MU-MIMO is set to be 64, and the number of the sub-bands is set to be 9.

As above, in the embodiment, the eNB 210 transmits the UE-specific RS specific to each of the mobile stations 120 from the horizontally arranged first plural antennas 113 and transmits the common DM-RS common to the mobile stations 120 from the vertically arranged second plural antennas 114 to give notification of the weight information for the vertical direction.

The mobile station 220 estimates the phase difference $\Delta h_v$ of the channel state between the antennas arranged in the vertical direction based on the common DM-RS. The mobile station 220 estimates the distortion component (the C component) for the data signal based on the estimation result of the channel state based on the UE-specific RS, the estimated phase difference $\Delta h_v$, and the weight information, and demodulates the data signal based on the estimated distortion component.

The mobile station 220 may therefore demodulate the data and may suppress increase of the radio resources used in the transmission of the reference signals and suppress increase of the amount of the control information even when the RS is not transmitted from all the antennas of the eNB 210. Increase of the overhead of the radio resources may therefore be suppressed and degradation of the transmission efficiency of the PDSCH may be suppressed.

EXPLANATIONS OF LETTERS OR NUMERALS

    100, 200 wireless communications system
    110 base station
    111 transmitting unit
    112 group of antennas
    113 first plural antennas
    114 second plural antennas

120, 220, 220a, 220b mobile station
121 receiving unit
122 demodulating unit
210 eNB
401 precoding determining unit
402 control signal generating unit
403 UE-specific RS generating unit
404 second precoding processing unit
405 first antenna mapping unit
406 common DM-RS generating unit
407 second antenna mapping unit
408 user scheduler unit
409 data signal generating unit
410 first precoding processing unit
411 physical channel multiplexing unit
412, 512 IFFT unit
413, 513 transmission RF
414, 514 transmission antenna
415, 501 reception antenna
416, 502 reception RF unit
417, 503 FFT unit
418 uplink control signal demodulating unit
504 control signal demodulating unit
505, 506 channel estimating unit
507 B-component calculating unit
508 C-component calculating unit
509 data signal demodulating unit
510 CSI calculating unit
511 uplink control signal generating unit

**Claims**

1. A wireless communications system comprising:

   a base station that transmits, by a group of antennas arranged two-dimensionally along a first direction and a second direction, a data signal weighted for respective antennas of the group of antennas,
   the base station weighting a first reference signal corresponding to the data signal and transmitting the first reference signal for each mobile station of mobile stations communicating with the base station, the base station transmitting the first reference signal by a first plurality of antennas included in the group of antennas and arranged along the first direction,
   the base station transmitting without executing weighting for each antenna, a second reference signal that is common to the mobile stations communicating with the base station, the base station transmitting the second reference signal by a second plurality of antennas included in the group of antennas and arranged along the second direction at positions corresponding to some antennas of the first plurality of antennas,
   the base station transmitting weight information indicating a weight for the data signal at antennas included in the group of antennas and arranged along the second direction; and
   a mobile station that demodulates the data signal transmitted by the base station, based on the first reference signal, the second reference signal, and the weight information transmitted by the base station.

2. The wireless communications system according to claim 1, wherein
   the base station does not transmit the first reference signal or the second reference signal by antennas that are different from the first plurality of antennas or the second plurality of antennas of the group of antennas.

3. The wireless communications system according to claim 1 or 2, wherein
   the mobile station estimates based on the second reference signal, a phase difference of a channel state between the antennas arranged along the second direction in the group of antennas,
   the mobile station estimates a distortion component for the data signal transmitted by the group of antennas, based on an estimation result of the channel state based on the first reference signal, the estimated phase difference, and the weight information, and
the mobile station demodulates the data signal based on the estimated distortion component.

4. The wireless communications system according to claim 3, wherein
the mobile station compares estimation results of the channel state based on the second reference signal transmitted by the second plurality of antennas, and
the mobile station estimates based on a result of comparison of the estimation results, the phase difference of the channel state between the antennas arranged along the second direction in the group of antennas.

5. The wireless communications system according to any one of claims 1 to 4, wherein
the group of antennas is a group of antennas having an arrangement interval of the antennas along the second direction smaller than one wavelength of a radio signal transmitted from the respective antennas included in the group of antennas.

6. The wireless communications system according to any one of claims 1 to 5, wherein
the first direction is a horizontal direction and the second direction is a vertical direction.

7. A base station comprising:

a transmitting unit that transmits, by a group of antennas arranged two-dimensionally along a first direction and a second direction, a data signal weighted for respective antennas of the group of antennas,
the transmitting unit transmitting for each mobile station of mobile stations communicating with the base station, a first reference signal weighted corresponding to the data signal, the transmitting unit transmitting the first reference signal by a first plurality of antennas included in the group of antennas and arranged along the first direction,
the transmitting unit transmitting without executing weighting for each antenna, a second reference signal that is common to the mobile stations communicating with the base station, the transmitting unit transmitting the second reference signal by a second plurality of antennas included in the group of antennas and arranged along the second direction at positions corresponding to some antennas of the first plurality of antennas, and
the transmitting unit transmitting weight information indicating a weight for the data signal at antennas included in the group of antennas and arranged along the second direction.

8. A mobile station comprising:

a receiving unit; and
a demodulating unit, wherein
the receiving unit receives a data signal weighted for respective antennas of a group of antennas and transmitted by a base station via the group of antennas arranged two-dimensionally along a first direction and a second direction,
the receiving unit receives a first reference signal weighted corresponding to the data signal and transmitted by the base station for each mobile station of mobile stations communicating with the base station, the first reference signal being transmitted via a first plurality of antennas included in the group of antennas and arranged along the first direction,
the receiving unit receives a second reference signal that is common to the mobile stations communicating with the base station and transmitted by the base station without executing weighting for each antenna, via a second plurality of antennas included in the group of antennas and arranged along the second direction at positions corresponding to some antennas of the first plurality of antennas,
the receiving unit receives weight information transmitted by the base station and indicating a weight for the data signal at antennas included in the group of antennas and arranged along the second direction, and
the demodulating unit demodulates the data signal received by the receiving unit, based on the first reference signal, the second reference signal, and the weight information received by the receiving unit.

9. A transmission method by a base station that transmits, by a group of antennas arranged two-dimensionally along a first direction and a second direction, a data signal weighted for respective antennas of the group of antennas, the transmission method comprising:

transmitting for each mobile station of mobile stations communicating with the base station, a first reference signal weighted corresponding to the data signal, the first reference signal being transmitted by a first plurality of antennas included in the group of antennas and arranged along the first direction;

transmitting without executing weighting for each antenna, a second reference signal that is common to the mobile stations communicating with the base station, the second reference signal being transmitted by a second plurality of antennas included in the group of antennas and arranged along the second direction at positions corresponding to some antennas of the first plurality of antennas; and

transmitting weight information indicating a weight for the data signal at antennas included in the group of antennas and arranged along the second direction.

10. A demodulation method by a mobile station that communicates with a base station that transmits via a group of antennas arranged two-dimensionally along a first direction and a second direction, a data signal weighted for respective antennas of the group of antennas, the demodulation method comprising:

receiving the data signal transmitted by the base station;

receiving a first reference signal weighted corresponding to the data signal and transmitted by the base station for each mobile station of mobile stations communicating with the base station, the first reference signal being transmitted via a first plurality of antennas included in the group of antennas and arranged along the first direction;

receiving a second reference signal that is common to the mobile stations communicating with the base station and transmitted by the base station without executing weighting for each antenna, via a second plurality of antennas included in the group of antennas and arranged along the second direction at positions corresponding to some antennas of the first plurality of antennas;

receiving weight information transmitted by the base station and indicating a weight for the data signal at antennas included in the group of antennas and arranged along the second direction; and

demodulating the data signal received, based on the first reference signal, the second reference signal, and the weight information received.

## FIG.1

# FIG.2

# FIG.3

## FIG.4

| 408 | 409 | 410 | 411 | 412 | 413 |
|---|---|---|---|---|---|
| USER SCHEDULER UNIT | DATA SIGNAL GENERATING UNIT | FIRST PRECODING PROCESSING UNIT | PHYSICAL CHANNEL MULTIPLEXING UNIT | IFFT UNIT | TRANS-MISSION RF UNIT |

210

ANT (0,0)

414

PRECODING INFORMATION (HORIZONTAL/VERTICAL DIRECTION)

401

PRECODING DETERMINING UNIT

PRECODING INFORMATION (VERTICAL DIRECTION), AP

402

CONTROL SIGNAL GENERATING UNIT

411 PHYSICAL CHANNEL MULTIPLEXING UNIT

412 IFFT UNIT

413 TRANS-MISSION RF UNIT

ANT (1,0)

414

PRECODING INFORMATION (HORIZONTAL DIRECTION)

403 UE-SPECIFIC RS GENERATING UNIT

404 SECOND PRECODING PROCESSING UNIT

405 FIRST ANTENNA MAPPING UNIT

411 PHYSICAL CHANNEL MULTIPLEXING UNIT

412 IFFT UNIT

413 TRANS-MISSION RF UNIT

ANT (7,9)

414

406 COMMON DM-RS GENERATING UNIT

407 SECOND ANTENNA MAPPING UNIT

418 UPLINK CONTROL SIGNAL DEMODULATING UNIT

417 FFT UNIT

416 RECEPTION RF UNIT

415

FIG.5

501

502 RECEPTION RF UNIT

503 FFT UNIT

509 DATA SIGNAL DEMODULATING UNIT

220

C COMPONENT

505 CHANNEL ESTIMATING UNIT (UE-specific RS)

A COMPONENT

508 C-COMPONENT CALCULATING UNIT

504 CONTROL SIGNAL DEMODULATING UNIT

PRECODING INFORMATION (VERTICAL DIRECTION)

B COMPONENT

507 B-COMPONENT CALCULATING UNIT

CHANNEL ESTIMATING UNIT (Common DM-RS) 506

PHASE DIFFERENCE IN VERTICAL DIRECTION ($\Delta h_V$)

510 CSI CALCULATING UNIT

CSI

513 TRANS-MISSION RF UNIT

514

512 IFFT UNIT

511 UPLINK CONTROL SIGNAL GENERATING UNIT

# FIG.6

414

ANT (0,0)   ANT (4,0)    ANT (1,0)   ANT (5,0)    ANT (2,0)   ANT (6,0)    ANT (3,0)   ANT (7,0)

ANT (0,1)   ANT (4,1)    ANT (1,1)   ANT (5,1)    ANT (2,1)   ANT (6,1)    ANT (3,1)   ANT (7,1)

--- --- --- ---

ANT (0,8)   ANT (4,8)    ANT (1,8)   ANT (5,8)    ANT (2,8)   ANT (6,8)    ANT (3,8)   ANT (7,8)

ANT (0,9)   ANT (4,9)    ANT (1,9)   ANT (5,9)    ANT (2,9)   ANT (6,9)    ANT (3,9)   ANT (7,9)

Vertical

Horizontal

# FIG.7

[eNB]                                              [UE]

ANT (m,0)        d sin θ

d

ANT (m,1)                              θ              $h_{m,1}$

$h_{m,0}$

ANT (m,2)

ANT (m,n)

$h_{m,n}$

# FIG.8

ANT (0,0)
ANT (1,0)
ANT (2,0)
ANT (3,0)
ANT (4,0)
ANT (5,0)
ANT (6,0)
ANT (7,0)
ANT (0,8)
ANT (0,9)
UE-specific RS
Common DM-RS
414

# FIG.9

# FIG.10

```
        eNB                      UE1          S1001          UE2
```

S1001 ⟶ CSI-RS
(COMMON BETWEEN UEs)                S1002                    S1002

CALCULATE CSI          CALCULATE CSI

S1003

CSI (FOR UE2)

CSI (FOR UE1)                      S1003

DETERMINE PRECODING ～ S1004

USER SCHEDULING ～ S1005            S1006

S1006 ⟶                            DCI (FOR UE2)

DCI (FOR UE1)                      S1007

S1007 ⟶                            UE-specific RS (FOR UE2)

UE-specific RS (FOR UE1)           S1008                    S1008

CALCULATE A          CALCULATE A
COMPONENT            COMPONENT

S1009 ⟶                            S1009

Common DM-RS          S1010                   S1010
(COMMON BETWEEN UEs)

CALCULATE B          CALCULATE B
S1011               COMPONENT            COMPONENT

CALCULATE C          CALCULATE C
S1012               COMPONENT            COMPONENT

S1012 ⟶                                                     S1011

PDSCH (FOR UE2)

PDSCH (FOR UE1)

DEMODULATE           DEMODULATE
S1013               PDSCH                PDSCH

S1013

```
       END                       END                        END
```

## FIG.11

1100

| UE SUBJECT TO MULTIPLEXING | PRECODING FOR PDSCH | PRECODING FOR UE-SPECIFIC RS | AP FOR UE-SPECIFIC RS | PRECODING INFORMATION TO BE NOTIFIED FOR VERTICAL DIRECTION |
|---|---|---|---|---|
| UE1 | $W_H(0), W_V(0)$ | $W_H(0)$ | AP7 | 0 |
| UE2 | $W_H(0), W_V(1)$ | $W_H(0)$ | AP7 | 1 |
| … | … | … | … | … |
| UE8 | $W_H(0), W_V(7)$ | $W_H(0)$ | AP7 | 7 |
| UE9 | $W_H(1), W_V(0)$ | $W_H(1)$ | AP8 | 0 |
| UE10 | $W_H(1), W_V(1)$ | $W_H(1)$ | AP8 | 1 |
| … | … | … | … | … |
| UE16 | $W_H(1), W_V(7)$ | $W_H(1)$ | AP8 | 7 |
| … | … | … | … | … |
| UE57 | $W_H(7), W_V(0)$ | $W_H(7)$ | AP14 | 0 |
| UE58 | $W_H(7), W_V(1)$ | $W_H(7)$ | AP14 | 1 |
| … | … | … | … | … |
| UE64 | $W_H(7), W_V(7)$ | $W_H(7)$ | AP14 | 7 |

# FIG.12

1200

| | TRADITIONAL SCHEME 1 | TRADITIONAL SCHEME 2 | EMBODIMENT |
|---|---|---|---|
| RESOURCE FOR RS [RE] | 24×8=192 | 24×10=240 | 24+2=26 |
| INCREASED AMOUNT OF DCI [bit] | 0 | 4+4×9+3=43 | 3 |

## INTERNATIONAL SEARCH REPORT

| International application No. |
| --- |
| PCT/JP2014/070791 |

A. CLASSIFICATION OF SUBJECT MATTER

*H04J99/00*(2009.01)i, *H04B7/04*(2006.01)i, *H04J11/00*(2006.01)i

According to International Patent Classification (IPC) or to both national classification and IPC

B. FIELDS SEARCHED

Minimum documentation searched (classification system followed by classification symbols)
H04J99/00, H04B7/04, H04J11/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | US 2013/0258964 A1 (SAMSUNG ELECTRONICS CO., LTD.), 03 October 2013 (03.10.2013), fig. 10, 11, 13, 14, 16; paragraphs [0084] to [0086], [0093] to [0095], [0148] to [0174] & EP 2645616 A2 & WO 2013/147565 A2 | 1-10 |
| A | US 2013/0308715 A1 (Samsung Electronics Co., LTD.), 21 November 2013 (21.11.2013), fig. 7A, 7B, 17B; paragraphs [0064], [0081] to [0086], [0220] to [0227] & EP 2665203 A1 & WO 2013/172692 A | 1-10 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 September, 2014 (18.09.14) | 04 November, 2014 (04.11.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/070791

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/088003 A1 (Sharp Corp.), 12 June 2014 (12.06.2014), paragraphs [0029] to [0031], [0039] to [0053], [0058] to [0062], [0070] to [0072], [0075] to [0083]; fig. 5 (Family: none) | 1-10 |
| A | Alcatel-Lucent Shanghai Bell, Alcatel-Lucent, Considerations on CSI feedback enhancements for high-priority antenna configurations[online], 3GPP TSG-RAN WG1#66 R1-112420, Internet <URL: http://www.3gpp.org/ftp/tsg_ran/WG1_RL1/TSGR1_66/Docs/R1-112420.zip>, 2011.08.22, paragraph 5 3D beamforming, Figure1 | 1-10 |
| A | LG Electronics, Antenna modeling for 3D channel studies[online], 3GPP TSG-RAN WG1#73 R1-132243, Internet <URL:http://www.3gpp.org/ftp/tsg_ran/WG1_RL1/TSGR1_73/Docs/R1-132243.zip>, 2013.05.20 | 1-10 |
| A | WO 2014/038321 A1 (NTT Docomo Inc.), 13 March 2014 (13.03.2014), paragraphs [0031] to [0046]; fig. 9 (Family: none) | 1-10 |
| A | WO 2014/038347 A1 (NTT Docomo Inc.), 13 March 2014 (13.03.2014), paragraphs [0024] to [0025], [0036] to [0068]; fig. 9, 10 (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Study on 3D-channel model for Elevation Beamforming and FD-MIMO studies for LTE. *3GPPTM Work Item Description,* December 2012

- 3rd Generation Partnership Project; Technical Specification Group Radio Access Network; Study on 3D channel model for LTE (Release 12). *3GPP TR 36.873 V1.1.1,* September 2013